# EUROPÄISCHE PATENTANMELDUNG

(11) **EP 3 144 546 A1**
(43) Veröffentlichungstag der Anmeldung: **22.03.2017**
(21) Anmeldenummer: 16188448.1
(22) Anmeldetag: 13.09.2016
(51) Int. Cl.: F16B 19/10

(54) **VERBINDUNGSEINRICHTUNG, VERBINDUNGSANORDNUNG UND VERFAHREN ZUM HERSTELLEN EINER VERINDUNGSEINRICHTUNG**

(30) Priorität: 18.09.2015 DE 102015012229
(71) Anmelder: SFS intec Holding AG, 9435 Heerbrugg (CH)
(72) Erfinder: SCHENDEL, Olav, 70567 Stuttgart (DE); COSTABEL, Sascha, 71083 Herrenberg (DE)

(57) **Zusammenfassung**

Die Erfindung betrifft eine Verbindungseinrichtung (10) mit einem Stift (12), der einen Schaft (14) und einen Kopf (16) aufweist, einem Aufnahmeelement (18), das einen Führungsabschnitt (20) und einen Spreizabschnitt (22) aufweist und in welches der Stift (12) einführbar ist, und einer Hülse (24), die auf dem Aufnahmeelement (18) sitzt und den Führungsabschnitt (20) zumindest teilweise umschließt, wobei der Spreizabschnitt (22) zumindest dann gespreizt ist, wenn der Stift (12) vollständig in das Aufnahmeelement (18) eingeführt ist. Stift (12) und Aufnahmeelement (18) sind nach Fertigung miteinander verbunden und zum Zwecke eines Einführens des Stiftes (12) in das Aufnahmeelement (18) voneinander trennbar. Ferner sind der Stift (12) und das Aufnahmeelement (18) einstückig aus Kunststoff geformt. Die Erfindung betrifft ferner eine Verbindungsanordnung und ein Herstellungsverfahren.

## Beschreibung

Die Erfindung betrifft eine Verbindungseinrichtung zum Verbinden von Bauteilen, eine Verbindungsanordnung, die eine solche Verbindungseinrichtung enthält, sowie ein Verfahren zum Herstellen einer Verbindungseinrichtung.

In vielen technischen Bereichen ist es erforderlich, Bauteile sicher und ohne großen Aufwand miteinander zu verbinden. Beispielhafte Bereiche sind die Luft- und Raumfahrttechnik, die Fahrzeugtechnik sowie der Schiffbau. Beispielsweise sollen häufig Leichtbauplatten mit lackierter Aluminiumstruktur miteinander verbunden werden, wobei durch Schlingerbewegungen und/oder Vibrationen keine Abnutzungen an den Strukturoberflächen entstehen dürfen. Beim Seetransport kennt man Schlingerbewegungen und Vibrationen sowie Scher- und Zugbelastungen. Diese sollen sicher durch die Verbindungseinrichtungen der Leichtbauplatten aufgenommen werden.

Gemäß dem Stand der Technik ist es bekannt, derartige Verbindungen von Leichtbauplatten mit einer Klippmutter vorzunehmen. Nachteilig an dieser Lösung ist allerdings, dass sich die Klippmuttern auf den lackierten Oberflächen der Leichtbauplatten abzeichnen.

Die DE 1 286 812 A beschreibt eine Blindnietanordnung, welche die Merkmale des Oberbegriffes von Anspruch 1 aufweist.

Aus der DE 20 098 20 121 U1 (D5) ist ein Spreizniet bekannt, der auf einem Zusammenwirken eines Spreizstiftes mit einem Nietkopf beruht. Der Nietkopf hat zu diesem Zwecke elastische Beine, welche durch den Spreizstift gespreizt werden können. Zur Vormontage des Spreizstiftes an dem Nietkopf trägt der Spreizstift ein Rastelement, welches zusammen mit dem Spreizstift einstückig durch Spritzguss herstellbar ist.

Der Erfindung liegt die Aufgabe zugrunde, eine preisgünstige und einfach zu montierende sowie zu demontierende Verbindungseinrichtung mit hoher Festigkeit zur Verfügung zu stellen, die geeignet ist, Schlingerbewegungen und Vibrationen zu widerstehen sowie Scher- und Zuglasten aufzunehmen. Es sollen eine geeignete Verbindungsanordnung unter Verwendung der Verbindungseinrichtung zur Verfügung gestellt werden sowie ein Verfahren zum Herstellen einer Verbindungseinrichtung.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung besteht in einer Verbindungseinrichtung mit einem Stift, der einen Schaft und einen Kopf aufweist, einem Aufnahmeelement, das einen Führungsabschnitt und einen Spreizabschnitt aufweist und in welches der Stift einführbar ist, und einer Hülse, die auf dem Aufnahmeelement sitzt und den Führungsabschnitt zumindest teilweise umschließt, wobei der Spreizabschnitt zumindest dann gespreizt ist, wenn der Stift vollständig in das Aufnahmeelement eingeführt ist. Die so definierte Verbindungseinrichtung, die Ähnlichkeiten mit einem Schraubniet hat, wird durch die feste Hülse geschützt. Diese auf das Aufnahmeelement aufgesteckte Hülse kann Scherlasten aufnehmen. Die Verbindungseinrichtung ist kostengünstig. Oberflächenbeschädigungen, wie sie bei der Verwendung einer Klippmutter auftreten, werden durch die vorliegende Verbindungseinrichtung nicht bewirkt.

Es ist vorgesehen, dass der Stift und das Aufnahmeelement nach Fertigung miteinander verbunden sind und zum Zwecke eines Einführens des Stiftes in das Aufnahmeelement voneinander trennbar sind. Mit Stift und Aufnahmeelement hat man also zunächst nur ein Teil, auf welches die Hülse noch aufgesteckt werden muss. Insofern ist eine einfache Handhabung bei der Montage möglich. Erst durch den Angriff auf den Stift, um diesen in das Aufnahmeelement hineinzutreiben, wird die Verbindung zwischen Stift und Aufnahmeelement getrennt. In diesem Moment wird der Stift aber bereits durch den Führungsabschnitt geführt, so dass es durch die Trennung von Stift und Aufnahmeelement nicht zu einer Erschwerung der Handhabung kommt.

Es ist vorgesehen, dass der Stift und das Aufnahmeelement einstückig aus Kunststoff geformt sind.

Vorzugsweise ist vorgesehen, dass die Hülse härter ist als das Aufnahmeelement. Da die Hülse insbesondere geeignet sein muss, Scherlasten aufzunehmen, ist eine gewisse Materialhärte nützlich. Diese sollte höher sein, als diejenige des Aufnahmeelementes, da es bei letzterem weniger auf die Aufnahme von Scherlasten ankommt, als vielmehr auf die Bereitstellung von Zugkräften zum Zusammenhalten der Bauteile.

Beispielsweise kann vorgesehen sein, dass die Hülse aus Metall gefertigt ist. Aufnahmeelement und Stift können hingegen, wie oben erwähnt, aus Kunststoff bestehen. Auch die Hülse kann aus Kunststoff bestehen. Dabei sollte, wie weiter oben erwähnt, ein Kunststoff verwendet werde, der härter ist als derjenige des Aufnahmeelementes.

Gemäß einer bevorzugten Ausführungsform ist vorgesehen, dass die Hülse einen Zylinderabschnitt und einen zumindest teilweise konischen Kragen aufweist, an dem der Kopf des Stiftes anschlägt, wenn der Stift vollständig in das Aufnahmeelement eingeführt ist. Hierdurch ist eine vollständig bündige Montage der Verbindungseinrichtung an den Bauteilen möglich.

Es kann aber auch nützlich sein, dass die Hülse zylindrisch ist. Die vollständig zylindrische Hülse eignet sich dann nicht mehr, um den Kopf der Schraube aufzunehmen. Vielmehr schlägt der Kopf der Schraube im vollständig montierten Zustand dann nicht mehr an der Hülse an, sondern an dem nächstliegenden Bauteil. Der Kopf ist dann nicht mehr bündig im Bauteil, sondern er steht vor.

Weiterhin kann vorgesehen sein, dass die Hülse einen axialen Spalt aufweist. Solche Hülsen können einfach aus Blech gerollt werden und sie bieten den Vorteil, dass ein Federn der Aufnahmeeinrichtung beim Eindrücken des Stiftes nicht blockiert wird.

Bei einer bevorzugten Ausführungsform ist vorgesehen, dass der Spreizabschnitt zumindest teilweise einen sich in einer Einführrichtung des Stiftes verkleinernden Innendurchmesser aufweist. Durch den sich verkleinernden Innendurchmesser wird der Spreizabschnitt beim Einführen des Stiftes auseinander getrieben.

Gemäß einer besonders bevorzugten Ausführungsform ist vorgesehen, dass der Schaft des Stiftes zumindest abschnittsweise ein Außengewinde aufweist. Das Einführen des Stiftes in die Aufnahmeeinrichtung erfolgt dann durch Schrauben.

In diesem Zusammenhang ist es nützlich, dass der Führungsabschnitt zumindest abschnittsweise ein Innengewinde aufweist.

Es kann aber auch vorgesehen sein, dass der Schaft des Stiftes an seiner Außenseite zumindest abschnittsweise eine Rillenstruktur aufweist.

Dann ist es nützlich, dass der Führungsabschnitt an seiner Innenseite zumindest abschnittsweise eine Rillenstruktur aufweist. Der Stift wird einfach in die Aufnahmeeinrichtung hinein gedrückt oder hinein geschlagen. Die Rillen von Stift und Führungsabschnitt greifen ineinander und verhindern hierdurch das Herausfallen des Stiftes. Auch bei der Variante, bei der der Stift ein Außengewinde und der Führungsabschnitt ein Innengewinde aufweisen, ist mitunter keine Schraubbewegung beim Einführen des Stiftes erforderlich. Auch hier können die federnden Eigenschaften der Aufnahmeeinrichtung genutzt werden, um den Stift einfach in die Aufnahmeeinrichtung einzudrücken beziehungsweise einzuschlagen.

Die Erfindung betrifft weiterhin eine Verbindungsanordnung mit mindestens zwei zu verbindenden Bauteilen und mindestens einer erfindungsgemäßen Verbindungseinrichtung, wobei die Verbindungseinrichtung in miteinander fluchtenden Öffnungen der Bauteile sitzt.

Dabei ist es besonders nützlich, dass sich die Hülse in axialer Richtung bis in ein dem Kopf des Stiftes abgewandtes Bauteil hinein erstreckt. Je weiter sich die Hülse in axialer Richtung in Bauteile erstreckt, die dem Kopf des Stiftes abgewandt sind, desto effizienter können Scherkräfte hiervon aufgenommen werden.

Gemäß einer bevorzugten Ausführungsform ist vorgesehen, dass die Verbindungseinrichtung in einem fertigen Zustand der Verbindungsanordnung elastisch verformt ist. Dies kann auch bedeuten, dass ausschließlich elastische Verformungen stattfinden, das heißt, keine plastischen Verformungen. Hierdurch unterscheidet sich die Verbindungsanordnung von Verbindungsanordnungen, die einen Niet beziehungsweise einen Schraubniet verwenden, da es bei Nietverbindungen häufig gerade auf die plastische Verformung der Bauteile ankommt. Selbstverständlich ist aber auch im Zusammenhang mit der vorliegenden Verbindungsanordnung plastische Verformung zulässig. Liegt keine plastische Verformung vor beziehungsweise ist die plastische Verformung gering, so erleichtert dies die Demontage der Verbindungsanordnung.

Die Erfindung betrifft weiterhin ein Verfahren zum Herstellen einer erfindungsgemäßen Verbindungseinrichtung, bei der der Schaft und das Aufnahmeelement einstückig gefertigt werden.

Die Erfindung wird nun mit Bezug auf die begleitenden Zeichnungen und besonders in Bezug der Ausführungsformen beispielhaft erläutert.
- Figur 1: zeigt eine Seitenansicht eines Teils einer erfindungsgemäßen Verbindungseinrichtung (erste Ausführungsform);
- Figur 2: zeigt eine perspektivische Darstellung einer erfindungsgemäßen Verbindungseinrichtung in nicht vollständig zusammengefügtem Zustand (erste Ausführungsform);
- Figur 3: zeigt eine teilweise geschnittene Seitenansicht einer erfindungsgemäßen Verbindungseinrichtung (erste Ausführungsform);
- Figur 4: zeigt eine teilweise geschnittene Seitenansicht einer erfindungsgemäßen Verbindungsanordnung im nicht festgelegten Zustand (erste Ausführungsform);
- Figur 5: zeigt eine teilweise geschnittene Seitenansicht einer erfindungsgemäßen Verbindungsanordnung im festgelegten Zustand (erste Ausführungsform);
- Figur 6: zeigt eine weitere Ausführungsform einer erfindungsgemäßen Verbindungsanordnung im nicht festgelegten Zustand (zweite Ausführungsform);
- Figur 7: zeigt eine weitere Ausführungsform einer erfindungsgemäßen Verbindungsanordnung im festgelegten Zustand (zweite Ausführungsform);
- Figur 8: zeigt eine perspektivische Darstellung einer weiteren Ausführungsform einer erfindungsgemäßen Verbindungseinrichtung in nicht vollständig zusammengefügten Zustand (dritte Ausführungsform);
- Figur 9: zeigt eine teilweise geschnittene Seitenansicht einer erfindungsgemäßen Verbindungseinrichtung (dritte Ausführungsform);
- Figur 10: zeigt eine teilweise geschnittene Seitenansicht einer erfindungsgemäßen Verbindungsanordnung im nicht festgelegten Zustand (dritte Ausführungsform);
- Figur 11: zeigt eine teilweise geschnittene Seitenansicht einer erfindungsgemäßen Verbindungsanordnung im festgelegten Zustand (dritte Ausführungsform).

Bei der nachfolgenden detaillierten Beschreibungen der Zeichnungen bezeichnen gleiche Bezugszeichen gleiche oder vergleichbare Komponenten.

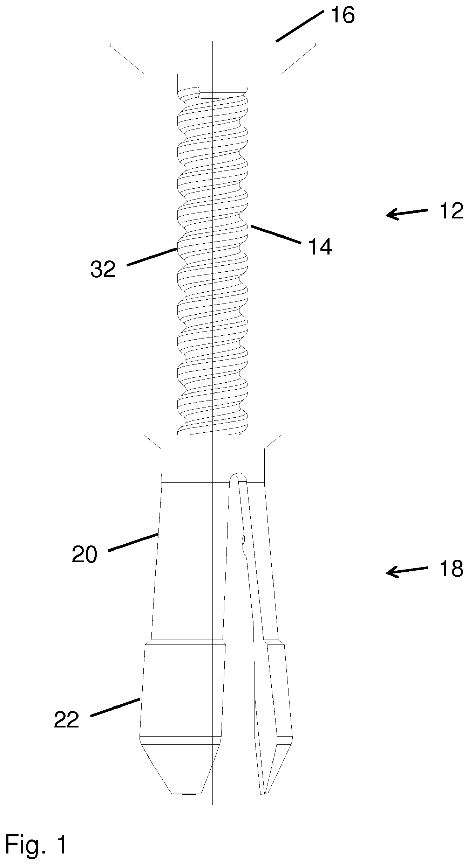

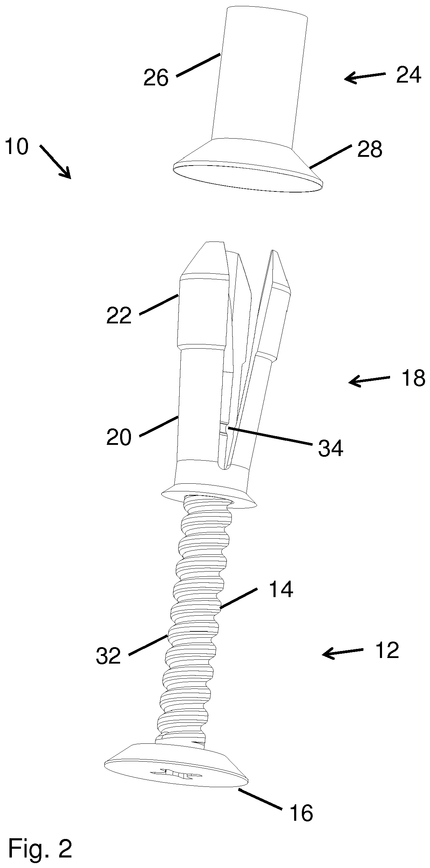

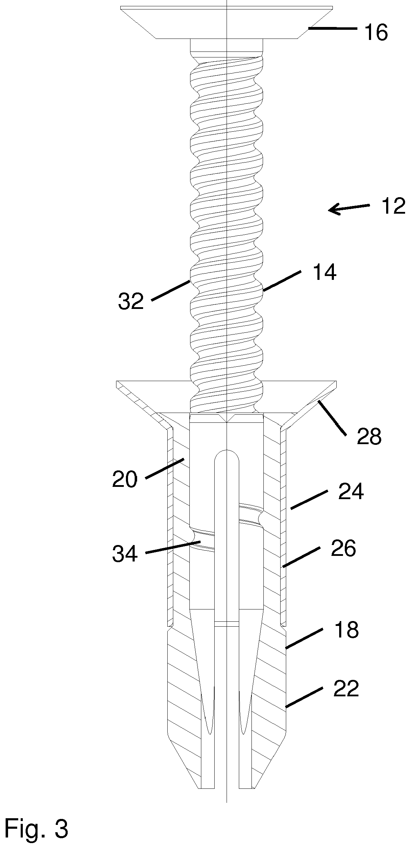

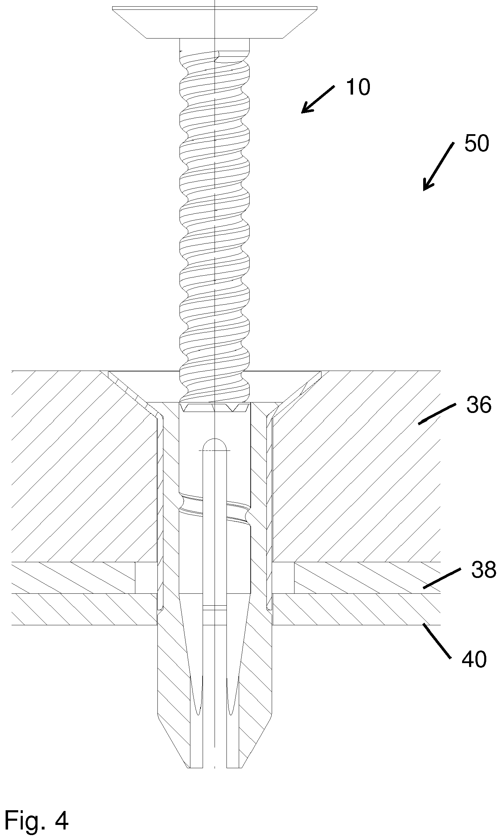

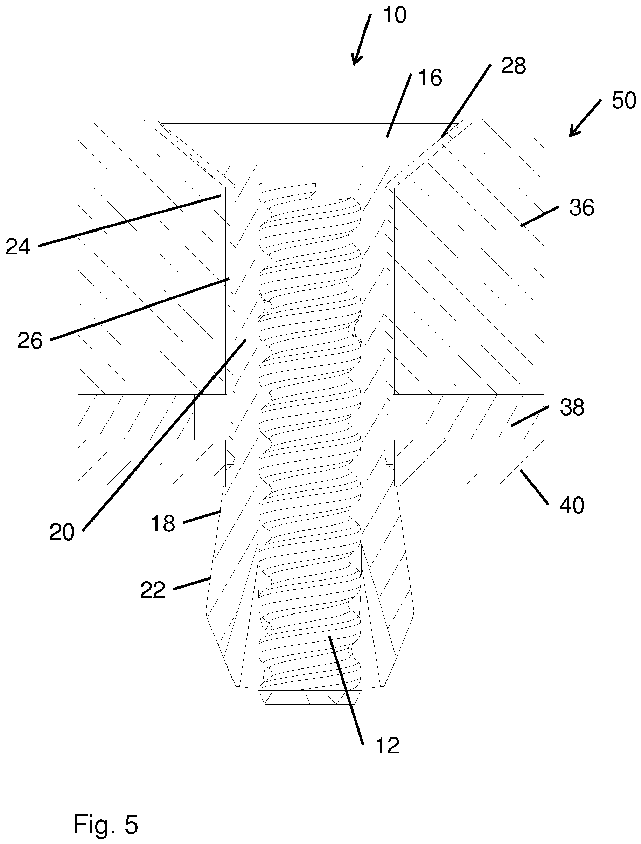

Die Figuren 1 bis 5 beziehen sich auf eine erste Ausführungsform einer erfindungsgemäßen Verbindungseinrichtung 10 beziehungsweise Verbindungsanordnung 50. Die Verbindungseinrichtung 10 weist einen Stift 12 mit einem Schaft 14 und einem Kopf 16 auf. Ferner ist ein Aufnahmeelement 18 vorgesehen. Das Aufnahmeelement 18 hat einen Führungsabschnitt 20 und einen Spreizabschnitt 22.

Im vorliegenden Ausführungsbeispiel ist der Stift 12 als Schraube ausgelegt, das heißt er weist ein Außengewinde 32 auf. Dementsprechend hat das Aufnahmeelement 18 und insbesondere der Führungsabschnitt 20 des Aufnahmeelementes 18 die Funktion einer Mutter. Zu diesem Zweck ist ein Innengewinde 34 vorgesehen, welches aus nur wenigen Gewindegängen, nur einem Gewindegang oder sogar nur dem Teil eines Gewindeganges bestehen kann.

Zum Zwecke der Montage der Verbindungsanordnung 50 wird eine Hülse 24 auf das Aufnahmeelement 18 aufgesteckt. Im vorliegenden Ausführungsbeispiel hat die Hülse 24 einen Zylinderabschnitt 26 und einen konischen Kragen 28.

Vor beziehungsweise zu Anfang der Montage sind der Stift 12 und das Aufnahmeelement 18 miteinander verbunden, das heißt sie sind einstückig. Dies resultiert aus der vorteilhaften einstückigen Fertigung dieser beiden Komponenten, vorzugsweise in Kunststoffspritzgussverfahren. Erst durch Einführen des Stiftes 12 in das Aufnahmeelement 18 werden diese Komponenten voneinander getrennt. Zu diesem Zweck wird der Stift gedreht und/oder gedrückt und/oder geschlagen. Je weiter der Stift 12 in den Spreizabschnitt 22 des Aufnahmeelementes 18 eindringt, wird dieser Spreizabschnitt 22 gespreizt. Dies resultiert daraus, dass der Spreizabschnitt 22 einen sich in einer Einführrichtung des Stiftes 12 verkleinernden Innendurchmesser aufweist. Im vollständig eingeführten Zustand des Stiftes 12 in dem Aufnahmeelement 18 ist das Aufnahmeelement 18 nur elastisch oder elastisch und plastisch verformt. Der Kopf 16 des Stiftes 12 liegt am konischen Kragen 28 der Hülse an. Der Kopf 16 fluchtet perfekt mit der Oberfläche des dem Kopf zugewandten Bauteils, also der Platte 36. Der Zylinderabschnitt 26 der Hülse 24 ragt bis in die unterste Platte 40 hinein. Hierdurch können Scherkräfte aufgenommen werden, die zwischen den Platten 36, 38, 40 wirken.

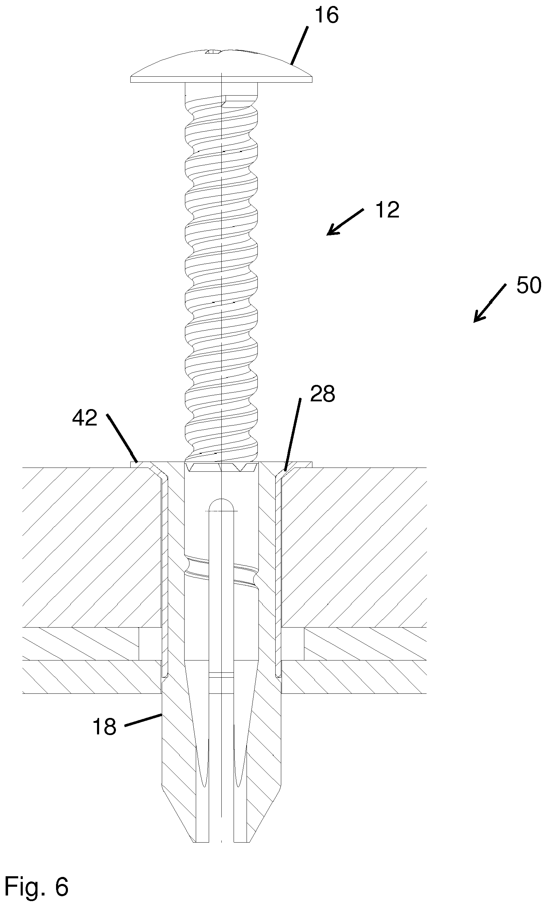

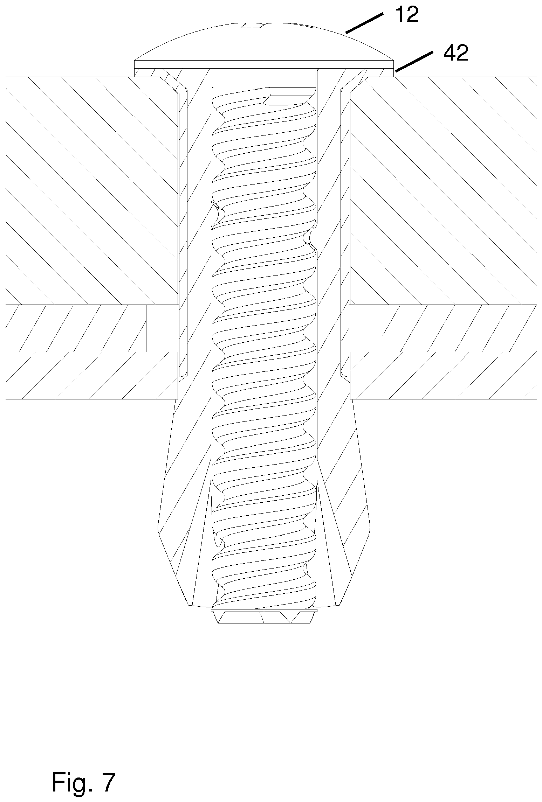

Die Figuren 6 und 7 zeigen eine zweite Ausführungsform einer erfindungsgemäßen Verbindungsanordnung 50 und einer erfindungsgemäßen Verbindungseinrichtung 10. Hier ist der Kragen 28 der Hülse nur teilweise konisch. Mit seinem äußeren Rand 42, der sich radial erstreckt, liegt der Kragen 28 der Hülse 24 auf der dem Kopf 16 des Stiftes 12 zugewandten Platte 36 auf. Dementsprechend liegt der Kopf 16 im zusammengebauten Zustand der Verbindungsanordnung 50 auf der Hülse 24 auf. Bei dieser Verbindungsanordnung 50 fluchtet der Kopf 16 nicht mit der Oberfläche der dem Kopf 16 zugewandten Platte 36.

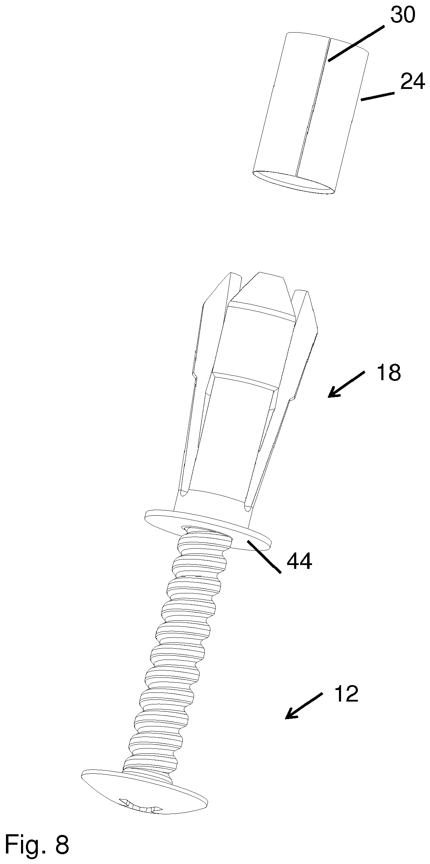

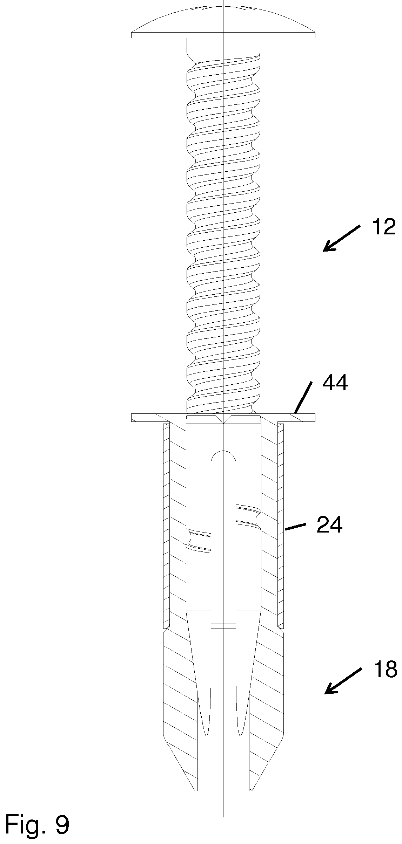

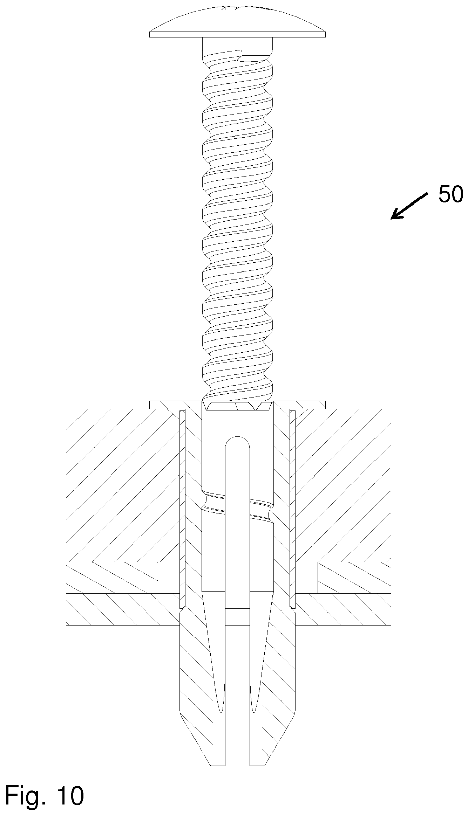

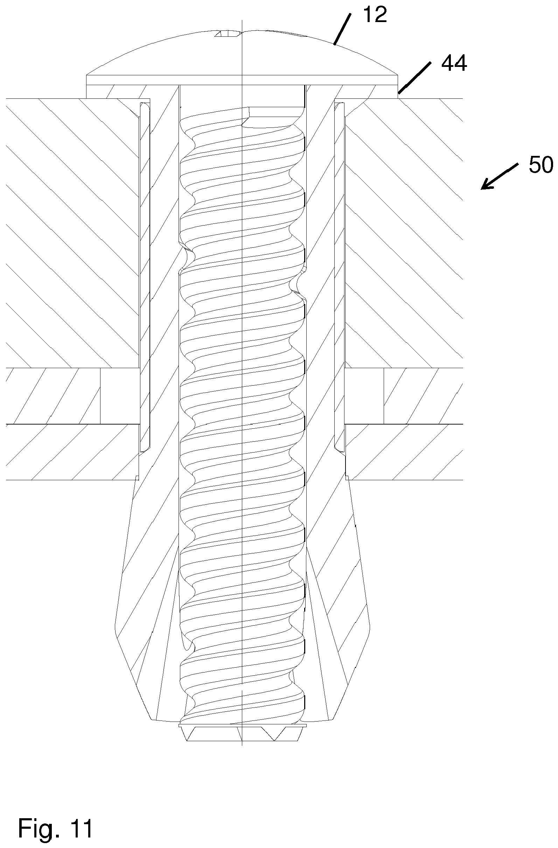

Die Figuren 8 bis 11 zeigen eine weitere Ausführungsform einer erfindungsgemäßen Verbindungseinrichtung 10 sowie erfindungsgemäßen Verbindungsanordnung 50. Die Hülse 24 ist vollständig zylindrisch und mit einem Spalt 30 ausgestattet. Das Aufnahmeelement 18 hat einen Kragen 44, auf dem sich der Kopf 16 des Stiftes 12 im fertig montierten Zustand abstützt, wie in Figur 11 zu erkennen ist.

Bei allen dargestellten Ausführungsformen ist der Stift 12 als Schraube realisiert. Entsprechend ist das Aufnahmeelement mit einem Innengewinde ausgestattet. Ebenso kann der Stift 12 aber mit einer anderen äußeren Struktur ausgestattet sein, die ihm einen Halt im Aufnahmeelement 18 vermittelt. Entsprechend ist dann das Aufnahmeelement 18 gestaltet. Beispielsweise können Stift 12 und Aufnahmeelement 18 Rillen aufweisen, die sich entlang des Umfangs des Stiftes 12 beziehungsweise an entsprechender Position des Aufnahmeelementes erstrecken. Die Fertigstellung der Verbindungsanordnung erfolgt dann nicht durch Eindrehen des Stiftes 12, sondern durch Einstecken beziehungsweise Einschlagen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Verbindungseinrichtung
- 12: Stift
- 14: Schaft
- 16: Kopf
- 18: Aufnahmeelement
- 20: Führungsabschnitt
- 22: Spreizabschnitt
- 24: Hülse
- 26: Zylinderabschnitt
- 28: Kragen
- 30: Spalt
- 32: Außengewinde
- 34: Innengewinde
- 36: Platte/Bauteil
- 38: Platte/Bauteil
- 40: Platte/Bauteil
- 42: Äußerer Rand
- 44: Kragen
- 50: Verbindungsanordnung

## Patentansprüche

1. Verbindungseinrichtung (10) mit
- einem Stift (12), der einen Schaft (14) und einen Kopf (16) aufweist,
- einem Aufnahmeelement (18), das einen Führungsabschnitt (20) und einen Spreizabschnitt (22) aufweist und in welches der Stift (12) einführbar ist, und
- einer Hülse (24), die auf dem Aufnahmeelement (18) sitzt und den Führungsabschnitt (20) zumindest teilweise umschließt,
- wobei der Spreizabschnitt (22) zumindest dann gespreizt ist, wenn der Stift (12) vollständig in das Aufnahmeelement (18) eingeführt ist,
**dadurch gekennzeichnet, dass** der Stift (12) und das Aufnahmeelement (18) nach Fertigung miteinander verbunden sind und zum Zwecke eines Einführens des Stiftes (12) in das Aufnahmeelement (18) voneinander trennbar sind und dass der Stift (12) und das Aufnahmeelement (18) einstückig aus Kunststoff geformt sind.

2. Verbindungseinrichtung (10) nach Anspruch 1, **dadurch gekennzeichnet, dass** die Hülse (24) härter ist als das Aufnahmeelement (18).

3. Verbindungseinrichtung (10) nach Anspruch 1 oder 2, **dadurch gekennzeichnet, dass** die Hülse (24) aus Metall gefertigt ist.

4. Verbindungseinrichtung (10) nach einem der vorhergehenden Ansprüche, **dadurch gekennzeichnet, dass** die Hülse (24) einen Zylinderabschnitt (26) und einen zumindest teilweise konischen Kragen (28) aufweist, an dem der Kopf (16) des Stiftes (12) anschlägt, wenn der Stift (12) vollständig in das Aufnahmeelement (18) eingeführt ist.

5. Verbindungseinrichtung (10) nach einem der Ansprüche 1 bis 3, **dadurch gekennzeichnet, dass** die Hülse (24) zylindrisch ist.

6. Verbindungseinrichtung (10) nach einem der vorhergehenden Ansprüche, **dadurch gekennzeichnet, dass** die Hülse (24) einen axialen Spalt (30) aufweist.

7. Verbindungseinrichtung (10) nach einem der vorhergehenden Ansprüche, **dadurch gekennzeichnet, dass** der Spreizabschnitt (22) zumindest teilweise einen sich in einer Einführrichtung des Stiftes (12) verkleinernden Innendurchmesser aufweist.

8. Verbindungseinrichtung (10) nach einem der vorhergehenden Ansprüche, **dadurch gekennzeichnet, dass** der Schaft (14) des Stiftes (12) zumindest abschnittsweise ein Außengewinde (32) aufweist.

9. Verbindungseinrichtung (10) nach Anspruch 8, **dadurch gekennzeichnet, dass** der Führungsabschnitt (20) zumindest abschnittsweise ein Innengewinde (34) aufweist.

10. Verbindungseinrichtung (10) nach einem der vorhergehenden Ansprüche, **dadurch gekennzeichnet, dass** der Schaft des Stiftes an seiner Außenseite zumindest abschnittsweise eine Rillenstruktur aufweist.

11. Verbindungseinrichtung (10) nach Anspruch 10, **dadurch gekennzeichnet, dass** der Führungsabschnitt an seiner Innenseite zumindest abschnittsweise eine Rillenstruktur aufweist.

12. Verbindungsanordnung (50) mit mindestens zwei miteinander zu verbindenden Bauteilen (36, 38, 40) und mindestens einer Verbindungseinrichtung (10) nach einem der vorhergehenden Ansprüche, wobei die Verbindungseinrichtung (10) in miteinander fluchtenden Öffnungen der Bauteile sitzt.

13. Verbindungsanordnung nach Anspruch 12, **dadurch gekennzeichnet, dass** sich die Hülse (24) in axialer Richtung bis in ein dem Kopf (16) des Stiftes (12) abgewandtes Bauteil (38, 40) hinein erstreckt.

14. Verbindungsanordnung nach Anspruch 12 oder 13, **dadurch gekennzeichnet, dass** die Verbindungseinrichtung (10) in einem fertigen Zustand der Verbindungsanordnung elastisch verformt ist.

15. Verfahren zum Herstellen einer Verbindungseinrichtung nach einem der Ansprüche 1 bis 11, **dadurch gekennzeichnet, dass** der Schaft (14) und das Aufnahmeelement (18) einstückig gefertigt werden.
